(19) Europäisches Patentamt
European Patent Office
Office européen des brevets

(11) **EP 3 258 594 B1**

(12) **EUROPEAN PATENT SPECIFICATION**

(45) Date of publication and mention
of the grant of the patent:
**18.05.2022 Bulletin 2022/20**

(21) Application number: **16175055.9**

(22) Date of filing: **17.06.2016**

(51) International Patent Classification (IPC):
**H02P 25/22** *(2006.01)*    **H02P 21/20** *(2016.01)*
**H02P 29/50** *(2016.01)*    *H02P 9/02* *(2006.01)*

(52) Cooperative Patent Classification (CPC):
**H02P 25/22; H02P 21/20; H02P 29/50;** H02P 9/02;
H02P 2101/15

(54) **CONTROLLING A MULTIPLE-SET ELECTRICAL MACHINE**

STEUERUNG EINER ELEKTRISCHEN MASCHINE MIT MEHRFACHEN WINDUNGSSÄTZEN

COMMANDE D'UNE MACHINE ÉLECTRIQUE À RÉGLAGE MULTIPLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.12.2017 Bulletin 2017/51**

(73) Proprietor: **Siemens Gamesa Renewable Energy
A/S
7330 Brande (DK)**

(72) Inventors:
• **Azar, Ziad
Sheffield, S6 2NR (GB)**
• **Thomas, Arwyn
Cheshire, SK8 6HW (GB)**
• **Xia, Zhen Ping
Sheffield, S10 5TR (GB)**
• **Owen, Richard
Sheffield, S5 6HF (GB)**

• **Wu, Zhan-Yuan
Sheffield, S10 4BB (GB)**

(74) Representative: **Aspacher, Karl-Georg et al
Siemens Aktiengesellschaft
Postfach 22 16 34
80506 München (DE)**

(56) References cited:
**EP-A1- 2 169 822       WO-A1-2015/086800
US-A1- 2015 270 747**

• **KALLIO SAMULI ET AL: "Determination of the
inductance parameters for the decoupled-model
of double-star permanent-magnet synchronous
mach", IET ELECTRIC POWER APPLICATIONS,
IET, UK, vol. 8, no. 2, 1 February 2014 (2014-02-01),
pages 39-49, XP006047055, ISSN: 1751-8660,
DOI: 10.1049/IET-EPA.2013.0195**

**Description**

Field of invention

The present invention relates to a method and to an arrangement for controlling an electrical machine having at least two sets of stator windings, further relates to a generator system and still further relates to a wind turbine.

Art Background

An electrical machine may for example provide a torque when supplied with electrical energy, thereby acting as a motor, or may generate electric energy when a rotor is mechanically driven, thereby acting as a generator. The rotor rotates relative to a stator. The stator may have one set of stator windings or may have two or even more sets of stator windings.

Document EP 2 169 822 A1 discloses a method for providing dynamic load sharing between a first and a second three phase system, wherein said first and second three phase system being connected to a first and second three phase interleaved winding in a generator is disclosed. The method comprises determining a first stator flux reference signal for the first three phase system and a second stator flux reference signal for the second three phase system based on a coupling effect between the first and second three phase systems, determining a first stator flux feedback signal for the first three phase system and a second stator flux feedback signal for the second three phase system based on a coupling effect between the first and second three phase systems, and determining a first stator flux control signal for the first three phase system based on said first stator flux reference signal and said first stator flux feedback signal, and a second stator flux control signal for the second three phase system based on said second stator flux reference signal and said second stator flux feedback signal.

Document US 2015/270747 A1 discloses a multiphase electric motor for a down-hole electrical submersible pump having a rotor having a first set of rotor voids filled or partially filled with permanent magnetic material. The electric motor having a stator with three or more stator slots, three or more stator teeth and three or more coils. Individual ones of the three or more coils are wound about at least one of the individual ones of the three or more stator teeth, and positioned such that adjacent coils are non-overlapping or partially overlapping to form a fractional slot per pole per phase winding. The electric motor having a power supply configured to provide power to the three or more phase windings formed by series or parallel combination of the three or more coils and a controller configured to control transmission of power through the three or more windings.

The publication KALLIO SAMULI ET AL: "Determination of the inductance parameters for the decoupled-model of double-star permanent-magnet synchronous mach",IET ELECTRIC POWER APPLICATIONS, IET, UK, vol. 8, no. 2, 1 February 2014, pages 39-49,ISSN: 1751-8660 discloses: Analytical models are the key tools in the model-based control design of electric drives. The inductances together with the stator resistance are the fundamental parameters of these models. In this study three methods to determine the inductances of the decoupledd-qmodel of double-star permanent-magnet (PM) synchronous machines are studied. These methods have commonly been used to determine the inductances of conventional three-phase PM machines. Two of the evaluated methods are based on the phase-variable inductance waveforms and flux linkages and are thus analysed with finite-element analyses only. The third method, based on the analytical stator voltage equations, can be applied straightforwardly with the real drive system supplied with voltage-source inverters (VSIs).This method requires only the knowledge of the rotor position and the existing current measurements of the VSIs that are used for the current control. Experimental results are provided to verify the applicability of the voltage-equation-based method to determine the inductances. On the average, the presented methods provide similar values, but also some discrepancies between the obtained values can be observed. The measured inductance parameters are validated using model-based closed-loop controllers.

It has been observed that when the stator has two sets of stator windings, higher harmonics may occur during operation which may diminish efficiency or capacity of the electrical machine. In a conventional system, using classical machine modelling technique, the 2F harmonics, in particular under reduced system operation, cannot be accurately estimated. Thus, in a conventional generator system, an accurate damping of the 2F torque ripple is difficult to achieve in practice.

Thus, there may be a need for a method and an arrangement for controlling an electrical machine having multiple stator winding sets, wherein the electrical machine, in particular a generator, has improved efficiency, less noise and a more reliable operation. Further, there may be a need for a generator system and a wind turbine in which the aforementioned problems are at least diminished.

The need is satisfied by the subject-matter of the independent claims. The dependent claims specify particular embodiments of the present invention.

## Summary of the Invention

The technical problem underlying the invention is solved by a method according to independent claim 1 and by an arrangement according to independent claim 11.

The method may be implemented in hardware and/or in software. The electrical machine may in particular be a generator, further in particular a generator included in a wind turbine. The rotor may be an outer rotor or an inner rotor. The permanent magnets of the rotor may be inductively coupled with the sets of stator windings, thus arranged to cause induction of voltages in the stator windings when rotating. Each set of the stator windings may for example be configured in a star configuration, wherein the different phases of each set (for example three phases) are enabled providing for each phase a wire. For each set of stator windings, the wires may be connected in a star configuration such that one end of each wire is commonly connected to respective ends of all other wires of this set of stator windings. Each wire in a set of stator windings may be wound around teeth of the stator system. Different winding methodologies may be used. In other embodiments, the plural sets of stator windings may not be connected in a star configuration. There may be more than two sets of stator windings, for example three sets, four sets, five sets or even more sets of stator windings.

The method may for example be applied for controlling a generator, while the rotor rotates relative to the stator such that voltages and currents are induced in the multiple sets of stator windings.

While the wires of one set of stator windings are commonly connected at one end (according to the star configuration), the other ends of the wires may be connected to input terminals of a converter. The converter may for example convert a variable frequency AC power stream to a fixed frequency power stream. Thereby, the converter may for example comprise an AC-DC portion which is adapted to convert the variable frequency AC power stream to a (substantially) DC-power stream (at a DC-link). Further, the converter may comprise a DC-AC portion which may be adapted to convert the DC-power stream to an AC-power stream having a desired frequency, such as 50 Hz or 60 Hz. If one set of the stator windings is disconnected from the converter or when the converter controls respective power transistors such that the wires of this set of stator windings are not electrically connected to other circuitry downstream the AC-DC portion, this set of stator windings, for example the second set of stator windings, is idle in a sense that it cannot carry any current. Thus, in this situation, the second current in the second set of stator windings is substantially zero. If only one set of stator windings, for example the first set of stator windings, carries a current, i.e. the first current, this situation is referred to as reduced system operation of the electrical machine.

If a first current in the first set of stator windings is present, the first current generates a magnetic field in the region of the first set of stator windings, but also in the region of the second set of stator windings. Thereby, a cross-coupling between the first set of stator windings and the second set of stator windings occurs. Embodiments of the present invention take into account the cross-coupling between different sets of stator windings in the electrical machine for controlling the electrical machine. The first current in the first set of stator windings generates a magnetic field which in turn gives rise to the primary first magnetic flux. However, the first current in the first set of stator windings also, via the generated magnetic field, which is in particular varying with time, induces voltages in the second set of stator windings which may be spatially close to the first set of stator windings. The voltages induced in the second set of stator windings in turn give rise to induced currents in the second set of stator windings, thereby generating the secondary second magnetic flux. The secondary second magnetic flux is a result of a cross-coupling between the first set of stator windings and the second set of stator windings, and the currents in the first set of stator windings.

The primary first magnetic flux as well as the secondary second magnetic flux may be determined using a simulation based on a physical model of the electrical machine, taking into account the geometry, material comprised in the electrical machine and the currents in the sets of stator windings.

The total magnetic flux may be determined as a sum of the primary first magnetic flux, the secondary second magnetic flux and a magnetic flux of the permanent magnets. When the second current in the second set of stator windings is zero (e.g. when the ends of the second set of stator windings which are not, according to the star configuration, commonly connected, are free of any connection to downstream circuitry), the electrical machine is in the reduced system operation.

Conventionally, the total magnetic flux may have been determined as a sum of the primary first magnetic flux and the magnetic flux of the permanent magnets, since the second set has no current and then does not generate any torque. Thereby, conventionally, the cross-coupling term, namely the secondary second magnetic flux, has been omitted. By inclusion of the cross-coupling term, i.e. the secondary second magnetic flux, the total magnetic flux may be determined with higher accuracy than conventionally known. Having determined an accurate total magnetic flux, i.e. electrical machine parameters, may enable to control the electrical machine to improve efficiency, in particular to reduce higher harmonics (having an oscillation frequency being a multiple of the electrical frequency of the electrical machine (being proportional to the rotational speed of the rotor multiplied by the number of pole pairs)) of torque in the electrical machine.

Employing the proposed technique to for example dual three-phase permanent magnet machines, such as dual three-phase permanent magnet generators, may accurately account for the second order harmonic (2F) torque (or even higher harmonic torque) due to unbalance under a single system operation. The method may also be applied when

3

more than one set of stator windings or in particular all sets of stator windings carry current, i.e. their current being non-zero. Embodiments of the present invention allow to determine accurately the magnitude and angle of a current to be injected (for example 2F current) and allow to minimize the output torque corresponding to the harmonic to be reduced, such as for example the second harmonic. In particular, the 2F output torque (or power) may be determined from the (generator voltage and) current inputs and magnetic flux. These may then be utilized to deliver accurate feedback to the 2F current controller for effective 2F ripple damping for the torque under faulty converter system operation, i.e. reduced system operation.

According to an embodiment of the present invention, the method further comprises determining secondary first magnetic flux generated by the first set of stator windings due to a second current in the second set of stator windings; determining a primary second magnetic flux generated by the second set of stator windings due to the second current in the second set of stator windings, wherein the determining a total magnetic flux is further based on the secondary first magnetic flux and the primary second magnetic flux, wherein in particular the second current is non zero.

According to this embodiment, also the second set of stator windings carries current (in particular induced by the rotating permanent magnets), in particular the second set of stator windings is also connected to the respective converter such that current flow in the second set of stator windings is enabled. These conditions, where all sets of stator windings carry same current (have current not equal to zero) is referred to as full system operation. Thus, the control method is also applicable to the full system operation. Also in this case, conventionally, a cross-coupling term has been disregarded, the cross-coupling term is in this case the secondary first magnetic flux which is generated by the first set of stator windings but not due to the first current but due to the second current in the second set of stator windings. Thus, also for the full system operation, the cross-coupling between the different sets of stator windings needs to be taken into account, to appropriately and accurately determine the total magnetic flux.

In the case of the full system operation, the total magnetic flux may in particular be derived as a sum of the primary first magnetic flux, the secondary second magnetic flux, the magnetic flux of the permanent magnets, the secondary first magnetic flux and the primary second magnetic flux.

In particular, the fluxes may be determined for each component in a d-q coordinate system which synchronously rotates with the rotor magnet field. Thus, the total magnetic flux may comprise a d-component and a q-component.

According to the present invention, the controlling of the electrical machine based on the total magnetic flux comprises: determining an inductance, in particular comprising a d-component and a q-component, based on the total magnetic flux and controlling the electrical machine based on the inductance

According to an embodiment of the present invention, the controlling of the electrical machine based on the total magnetic flux comprises: determining a torque, in particular comprising a d-component and a q-component, based on the total magnetic flux and controlling the electrical machine further based on the torque.

The torque and/or the inductance may be derived using conventionally known equations. The torque may for example be determined to comprise a second harmonic component which may be undesired. However, when the magnetic fluxes are accurately determined, an appropriate current to be injected can be calculated such that the undesired higher harmonic component of the torque is cancelled or at least essentially vanishes. Thereby, the efficiency of the electrical machine may be improved and higher harmonic torque may be counteracted.

According to an embodiment of the present invention, the controlling the electrical machine based on the inductance and/or torque comprises: determining amplitude and phase of a higher harmonic current, in particular having frequency two times or four times an electrical frequency of the electrical machine, based on the inductance and/or torque, and injecting the higher harmonic current into the first stator windings and/or the second stator windings.

When amplitude and phase of the higher harmonic current has been accurately determined, the respective converter may be controlled appropriately for controlling switching of the power transistors such as to achieve the current to be injected. Thus, injecting the higher harmonic current into the first stator windings and/or the second stator windings may be accomplished by appropriately controlling the respective converters downstream the generator. In particular, when, during single system operation, i.e. one of the two systems (i.e. stator windings) is not connected, there is 2F (or higher harmonic) torque, the higher harmonics (e.g. 2F) current may be only injected in one system, i.e. connected system.

According to an embodiment of the present invention, the amplitude and the phase of the higher harmonic current is determined such as to counteract a higher harmonic component of the determined torque. Thereby, undesired ripple may be diminished and the efficiency of the electrical machine may be improved.

According to present invention, the determining the magnetic fluxes comprises providing a finite element simulation of the electrical machine, providing as inputs the first current, and applying the finite element simulation to calculate the magnetic fluxes.

According to an embodiment of the present invention, the determining the magnetic fluxes comprises providing a finite element simulation of the electrical machine, providing as inputs the second current, and applying the finite element simulation to calculate the magnetic fluxes.

The finite element model may be set up by defining the detailed geometry and configuration of the electrical machine including the stator, the sets of stator windings, the winding geometry, the geometry and material of stator base material, the geometry of the rotor, the configuration of the permanent magnets, the arrangement of the permanent magnets and so on. The finite element software in order to build the finite element model may be conventionally known. The fluxes may be calculated by finite element method as well as analytically. However, results obtained for the finite element method may be more accurate.

According to an embodiment of the present invention, the determining the magnetic fluxes comprises determining magnetic fluxes in a stationary coordinate system having axes corresponding to different phases of the sets of stator windings and transforming from the stationary coordinate system to the rotating dq-coordinate system, in particular using a Park-Clarke transformation.

In the stationary coordinate system, when each set of stator windings comprises three wires, providing three phases, the magnetic fluxes may for example be determined for an a-axis, a b-axis and a c-axis. The first current may be represented as $I_a$, $I_b$, $I_c$. The method may be extended for more than three phases. The dq-coordinate system rotates synchronously with the electrical frequency of the electrical machine. Ideally, if there are no higher harmonics, all currents of the stator windings are DC-quantities when transformed into the dq-coordinate system. However, when higher harmonics are present, these quantities are also AC-quantities in the dq-coordinate system. Transformation in the dq-coordinate system may simplify the calculations.

The electrical machine, in particular the generator, may have in total n sets of stator windings (n ≥ 2) and may have m sets of stator windings which have currents larger than zero, wherein m < n. Thus, according to this embodiment of the present invention, not all sets of stator windings carry currents and are thus operating, but some are operating, while some are idle and carry no current. However, according to other embodiments of the present invention, all sets of stator windings may carry current.

According to an embodiment of the present invention, the electrical machine comprises for every set of stator windings a converter connected to the respective set of windings (in particular connected to ends of the windings which are not commonly connected to each other in the star configuration), the converter having plural power transistors arranged between DC-buses, the method further comprising: controlling the power transistors regarding their switching based on the inductance and/or torque.

Each converter may comprise an AC-DC portion, a DC-link and a DC-AC portion. A gate driver circuit or several gate driver circuits may be provided to generate gate control signals for controlling the switching of the power transistor.

According to an embodiment of the present invention it is provided a generator system, comprising a generator having a rotor with permanent magnets and having a stator system with at least a first set and a second set of stator windings, a first converter coupled the first set of stator windings, a second converter coupled the second set of stator windings, an arrangement for controlling an electrical machine according to the preceding embodiment coupled such as to provide the control signal to the first converter and the second converter.

Further, a wind turbine is provided which comprises a rotor shaft to which plural rotor blades are connected and which further comprises a generator system according to an embodiment as described above, wherein the rotor of the generator system is mechanically coupled to the rotor shaft. It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Fig. 1 illustrates torque curves of a dual three phase electrical machine;

Fig. 2 illustrates voltage curves at operating stator windings of a dual three phase electrical machine;

Fig. 3 illustrates voltage curves of non-operating stator windings of a dual three phase electrical machine;

Fig. 4 illustrates an output torque of a dual three-phase permanent magnet machine under single system operation;

Fig. 5 illustrates comparison of torques as determined by different calculation methods;

Fig. 6 schematically illustrates a wind turbine according to an embodiment of the present invention including a generator system according to an embodiment of the present invention which includes an arrangement for controlling an electrical machine according to an embodiment of the present invention;

Fig. 7 illustrates a comparison of torques determined according to an embodiment of the present invention and a conventional method;

Fig. 8 illustrates a comparison of torque waveforms of a dual three-phase permanent magnet machine under single system operation with and without injecting 2F current optimized according to an embodiment of the present invention;

Fig. 9 illustrates a comparison of torque harmonics without and with injection of a 2F current according to an embodiment of the present invention.

Detailed Description

Classically, any permanent magnet machine may be modelled in a dq-axis frame by equation (1) below:

Eq. (1):

$$T = 1.5p(\psi_d I_q + \psi_q I_d) = 1.5p[\psi_{PM} I_q + (L_q - L_d)I_d I_q]$$

Therein, p, $\Psi_{PM}$, $\Psi_d$, $\Psi_q$, $L_d$, $L_q$, $I_d$ and $I_q$ are pole pair number, permanent magnet flux linkage, d- and q-axis flux linkages, inductances and currents, respectively. These parameters can be used to control the electrical machine under operation. For a dual three-phase permanent magnet machine under two system operation mode (i.e. there is non-vanishing current in both sets of stator windings and same current value in system1 and system2), the total flux linkages are conventionally determined as the sum of each set flux linkages, while the inductances are given by:

Eq. (2):

$$L_d = (\psi_d - \psi_{PM})/I_d$$
$$L_q = \psi_q / I_q$$

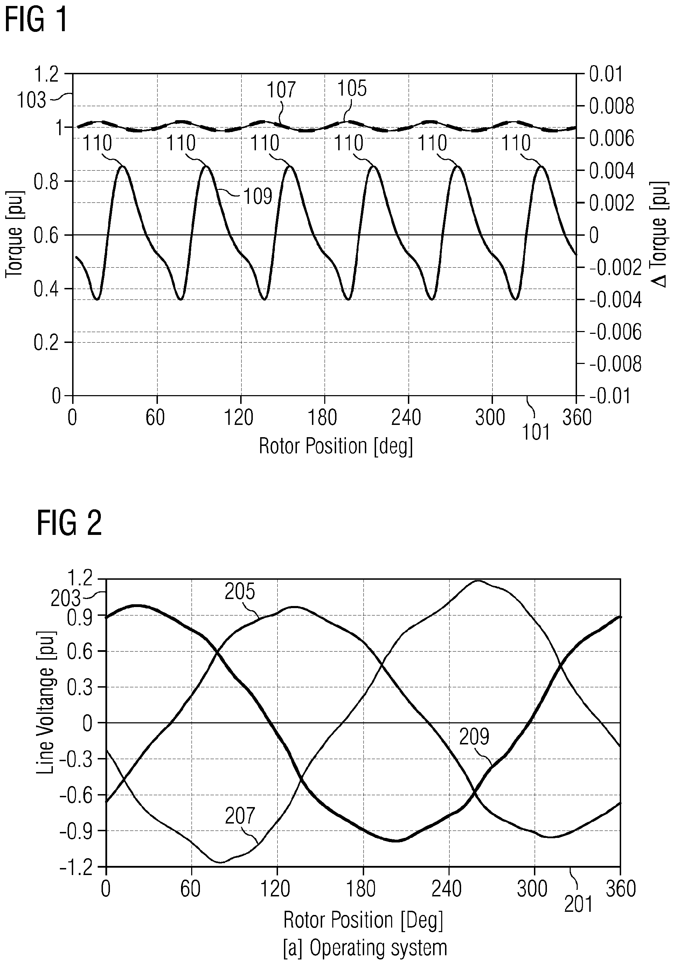

The difference between the torque, according to Maxwell stress tensor method which is the reference, and the dq-axis modelled counterpart is significantly small and has 6F harmonics (cogging torque) as illustrated in Fig. 1 in which the abscissa 101 denotes the rotor position and the ordinate 103 denotes the torque. The curve 105 represents an reference torque (according to Maxwell stress tensor),the curve 107 represents the results according to the classical dq-axis model according to equation (1) and the curve 109 represents the difference between curve 107 and 105. The difference 109 shows six maxima 110 along the whole electrical cycle, thereby representing 6F torque harmonics. The classical model as described by equation (1) may be used to estimate the optimal 6F current harmonics to be injected to reduce the 6F torque ripple as illustrated in Fig. 1.

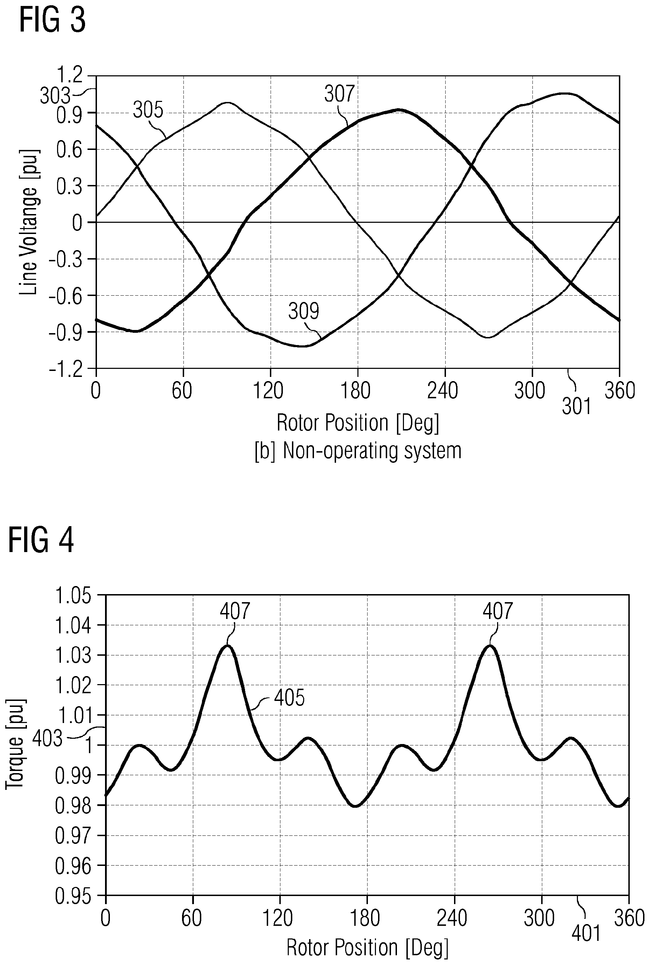

It has however been observed that, during single system operation (in which only one set of stator windings has a non-zero current), the phases of the operating (also the non-operating system) become unbalance and have 2F harmonics, as illustrated in **Figs. 2 and 3.** Therein, the abscissas 201, 301 denote the rotor position and the ordinate 203, 303 denote the line voltages, i.e. the voltages between mutually different wires of one set (of in total three sets) of stator windings. Herein, in Fig. 2, the line voltages of the operating system (i.e. the set of stator windings carrying a current non-zero) are indicated, wherein the curve 205 represents the voltage between wire A and wire B of the first set of windings. The curve 207 represents the voltage between the wires B and C of the first set of stator windings and the curve 209 represents the voltage between the wires C and A of the first set of stator windings. In Fig. 3, the curve 305 represents the voltage between the wires A and B of the second set of stator windings, the curve 307 represents the voltage between the wires B and C of the second set of stator windings and the curve 309 represents the voltage between the wires C and A of the second set of stator windings, the second set of stator windings carrying no current. As can be appreciated from Figs. 2 and 3, the line voltages are not balanced (they should be exactly the same shape but only shifted by 120°) but show differences in shape. The unbalancing is due to unbalanced magnetic-circuit under single system operation.

The resulting torque according to Maxwell stress tensor method is illustrated in **Fig. 4,** wherein the abscissa 401 denotes the rotor position and the ordinate 403 denotes the torque. The curve 405 represents the torque based on the line voltages illustrated in Figs. 2 and 3. As a result, 2F harmonics are generated in the output torque, as can be appreciated from curve 405 showing two profound maxima 407, i.e. two maxima 407 along the complete electrical cycle.

In order to reduce the torque peaks 407, conventionally, it has been tried to inject 2F current. For correctly damping the torque 2F harmonics, the magnitude and the angle of the current to be injected must be properly adjusted. It should be noted that the optimal current is different for every load condition. For this purpose, the machine parameters under the single system operation should be correctly estimated which may be accomplished by embodiments of the present invention.

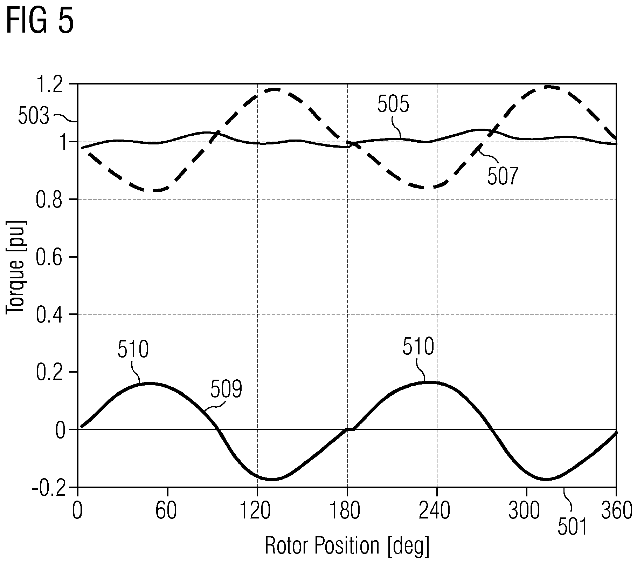

**Fig. 5** illustrates a comparison between a reference method (Maxwell stress tensor) and dq-axis classical method used to calculate the torque of a dual three-phase permanent magnet machine under single system operation. Therein, the abscissa 501 denotes the rotor position while the ordinate 503 denotes the torque. The curve 505 represents the reference (calculated according to Maxwell stress), the curve 507 represents the results using the classical dq-axis model (equations (1) and (2)) and the curve 509 represents the difference between the curve 505 and the curve 507. The classical model is further defined by the following set of equations (3), assuming the torque is only generated by the set that carries current, i.e. the set that has no current has no contribution.

$$\text{Eq. (3):}$$

$$\psi_d = \psi_{d1}$$

$$\psi_q = \psi_{q1}$$

$$I_d = I_{d1}$$

$$I_q = I_{q1}$$

$$L_d = (\psi_d - \psi_{PM})/I_d$$

$$L_q = \psi_q/I_q$$

If the classical model is used for determining the corresponding torque waveform (curve 507), it does not agree with the reference torque 505. From Fig. 5 it becomes clear that the average torque agrees but not the ripple, the difference 509 is obviously not cogging torque, since it exhibits two maxima 510 and is therefore a 2F waveform. Fig. 5 illustrates that the classical method of calculating the torque (represented by equations (1), (2), (3)) is not accurately enough, to account for the magnetic unbalance.

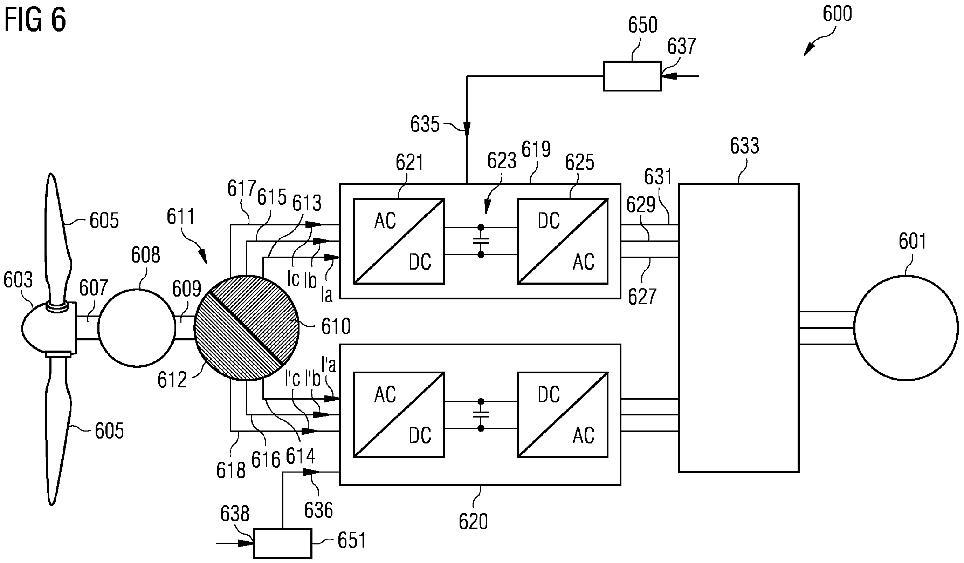

**Fig. 6** schematically illustrates a wind turbine 600 in a schematic form according to an embodiment of the present invention which provides electric energy to a utility grid 601. The wind turbine 600 comprises a hub 603 to which plural rotor blades 605 are connected. The hub 603 is mechanically connected to a main shaft 607 whose rotation is transformed by an optional gearbox 608 to a rotation of a secondary shaft 609.

The main shaft 607 or the secondary shaft 609 drives a dual generator 611 according to an embodiment of the present invention.

The generator 611 illustrated in Fig. 6 comprises a stator having a first set (613, 615, 617) of stator windings and having a second set (614, 616, 618) of stator windings. Herein, the generator 611 comprises a first stator portion 610 associated with the first set of stator windings 613, 615 and 617. The generator 611 further comprises a second stator portion 612 associated with the second set of stator windings 614, 616, 618.

The first set of stator windings provides the power flow to the first converter 619 and the second set of stator windings provides a power stream to the second converter 620. The first converter 619 and the second converter 620 may be similarly constructed. Thereby, the first converter 619 is controlled via the arrangement 250 by providing a converter command 635 to the first converter 619 based on at least one input signal 637. Further, the second converter 620 is controlled via a converter command 636 supplied by another arrangement 651 according to an embodiment of the present invention which receives at least one input signal 638.

The generator 611 may in particular be a synchronous permanent magnet dual generator providing a first three phase power stream in the first stator windings 613, 615 and 617. The first set of stator windings 613, 615 and 617 is connected to the first converter 619 which comprises an AC-DC portion 621, a DC-link 623 and a DC-AC portion 625 for transforming a variable AC power stream to a fixed frequency AC power stream which is output in three phases at wires 627, 629 and 631. The first output power stream is provided to a wind turbine transformer 633, which transforms the output voltage to a higher voltage for transmission to the utility grid 601.

The windings 613, 615, 617 represent a first set of stator windings and the windings 614, 616 and 618 represent a second set of stator windings.

The converter 619 is controlled via a converter command 635 which is derived and supplied from an arrangement 250 for controlling an electrical machine according to an embodiment of the present invention. Therein, the arrangement 250 receives at least one input signal 637, such as one or more reference values or one or more quantities indicative of the operation of the generator 611 or any component of the wind turbine 600.

In particular, the arrangements 650, 651 may together form an arrangement for controlling an electrical machine according to an embodiment of the present invention. The arrangements 650, 651 are configured to carry out a method for controlling an electrical machine according to an embodiment of the present invention.

According to an embodiment of the present invention, for a permanent magnet machine (for example generator) with two sets of stator windings, the components of the d- and q-axis flux linkages may be calculated as defined in the following equations (4) and (5):

Eq. (4):

$$\psi_d = \psi_{PM} + \psi_{d1}(I_{d1}) + \psi_{d1}(I_{d2}) + \psi_{d1}(I_{q1}) + \psi_{d1}(I_{q2}) + \psi_{d2}(I_{d1}) + \psi_{d2}(I_{d2}) + \psi_{d2}(I_{q1}) + \psi_{d2}(I_{q2})$$

Eq. (5):

$$\psi_q = \psi_{q1}(I_{d1}) + \psi_{q1}(I_{d2}) + \psi_{q1}(I_{q1}) + \psi_{q1}(I_{q2}) + \psi_{q2}(I_{d1}) + \psi_{q2}(I_{d2}) + \psi_{q2}(I_{q1}) + \psi_{q2}(I_{q2})$$

Therein, $\Psi_{d1}(I_{d1})$, $\Psi_{d1}(I_{d2})$, $\Psi_{d1}(I_{q1})$, $\Psi_{d1}(I_{q2})$, $\Psi_{d2}(I_{d1})$, $\Psi_{d2}(I_{d2})$, $\Psi_{d2}(I_{q1})$, $\Psi_{d2}(I_{q2})$, $\Psi_{q1}(I_{d1})$, $\psi_{q1}(I_{d2})$, $\Psi_{q1}(I_{q1})$, $\Psi_{q1}(I_{q2})$, $\Psi_{q2}(I_{d1})$ $\Psi_{q2}(I_{d2})$, $\Psi_{q2}(I_{q1})$, $\Psi_{q2}(I_{q2})$ are, respectively, the first set and the second set d- and q-axis flux linkages due to d- and q-axis currents in the first set and the second set of stator windings, respectively. For example, $I_{d1}$, $I_{q1}$ represent the first current (flowing in the first set of stator winding) in the dq-coordinate system. $\psi_{d1}$, $\psi_{q1}$ represent the magnetic flux generated by the first set of stator windings in the dq-coordinate system due to the first current ($I_{d1}$, $I_{q1}$) and the second current ($I_{d2}$, $I_{q2}$).

As can be appreciated from equations (4) and (5), the magnetic flux (in the dq system) comprises a primary first magnetic flux, i.e. $\psi_{d1}(I_{d1})$, $\psi_{d1}(I_{q1})$, $\psi_{q1}(I_{d1})$, $\psi_{q1}(I_{q1})$. Further, the magnetic fluxes calculated from equations (4) and (5) comprise a secondary first magnetic flux, i.e. $\psi_{d1}(I_{d2})$, $\psi_{d1}(I_{q2})$, $\psi_{q1}(I_{d2})$, $\psi_{q1}(I_{q2})$. Further, the magnetic fluxes calculated from equations (4) and (5) comprise a primary second magnetic flux, i.e. $\psi_{d2}(I_{d2})$, $\psi_{d2}(I_{q2})$, $\psi_{q2}(I_{d2})$, $\psi_{q2}(I_{q2})$ and a secondary second magnetic flux, i.e. $\psi_{d2}(I_{d1})$, $\psi_{d2}(I_{q1})$, $\psi_{q2}(I_{d1})$, $\psi_{q2}(I_{q1})$.

Therein, the secondary magnetic fluxes represent fluxes resulting from a magnetic cross-coupling between the first set of stator windings and the second set of stator windings. These cross-coupling terms have not been considered and taken into account in the classical model.

Under a single system operation, i.e. when $I_{d2}=I_{q2}=0$, all flux linkages generated by the second system d- and q-axis currents are zero, so the d- and q-axis flux linkages become as given in equations (6) and (7):

Eq. (6):

$$\psi_d = \psi_{PM} + \psi_{d1}(I_{d1}) + \psi_{d1}(I_{q1}) + \psi_{d2}(I_{d1}) + \psi_{d2}(I_{q1}) = \psi_{d1} + \Delta\psi_{d2}(I_{d1}, I_{q1})$$

Eq. (7):

$$\psi_q = \psi_{q1}(I_{d1}) + \psi_{q1}(I_{q1}) + \psi_{q2}(I_{d1}) + \psi_{q2}(I_{q1}) = \psi_{q1} + \Delta\psi_{q2}(I_{d1}, I_{q1})$$

The torque and inductances may still be calculated according to equations (1) and (3) respectively.

In equation (6) and (7), the terms $\Delta\Psi_{d2}$ ($I_{d1}$, $I_{q1}$) and $\Delta\Psi_{q2}(I_{d1}, I_{q1})$ are flux variations of the second system (second set of stator windings) d- and q-axis flux linkages due to the first system (first set of stator windings) d- and q-axis currents. It is clear that even the second set which carries no current still contributes to torque (and thus to machine parameters).

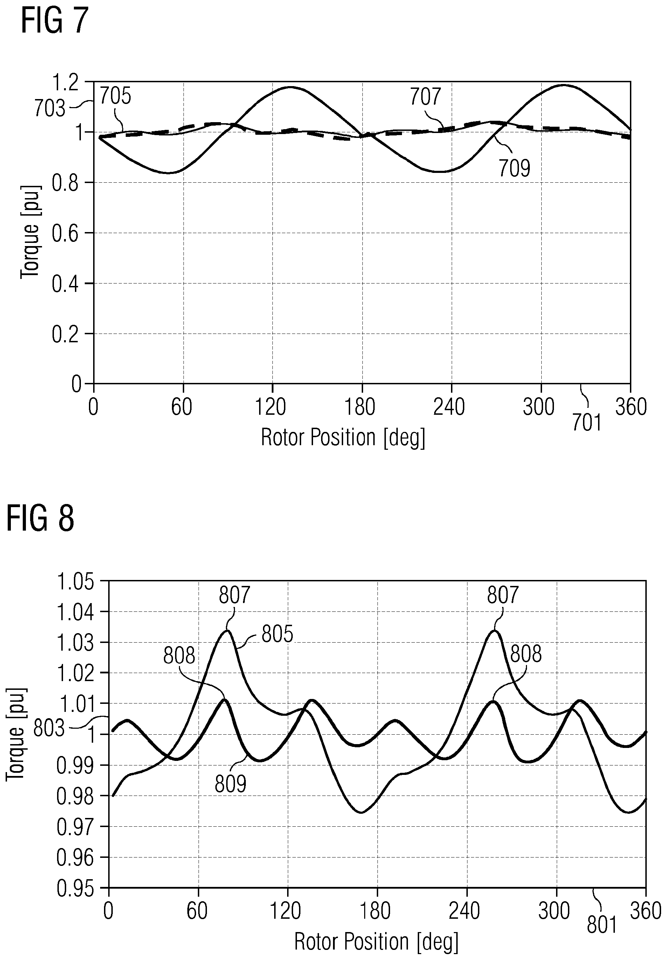

In order to validate the proposed methodology of calculating or determining magnetic fluxes, the therefrom derived torque is compared to a reference calculation (according to Maxwell stress tensor), as illustrated in **Fig. 7.** In Fig. 7, the abscissa 701 indicates the rotor position and the ordinate 703 indicates the torque. The curve 705 represents the reference derived according to Maxwell stress tensor. The curve 707 represent the torque as calculated according to an embodiment of the present invention using equation (4) to (7) and further using equation (1). As can be appreciated from Fig. 7, the reference torque 705 and the torque according to the proposed method almost match, while the torque 709 calculated according to the classical model strongly deviates from the reference 705.

The machine parameters according to the new technique have been utilized to optimize the appropriate 2F current (for adjusting or defining the angle and the magnitude), as is illustrated in **Fig. 8,** wherein the abscissa 801 indicates the rotor position while the ordinate 803 indicates the torque. The curve 805 represents the torque without injecting a 2F current. As is obvious from Fig. 8, the curve 805 comprises two maxima 807 indicating a 2F torque harmonic. When a 2F current is injected as derived using an embodiment of the present invention, the curve 809 is obtained. As can be appreciated from Fig. 8, the curve 809 does not exhibit the profound maxima 807 corresponding to 2F harmonics but elevations 808. In particular, the elevations 808 are about 67% reduced compared to the maxima 807. Thereby, the injected (optimal) 2F current is about 1% of the rated counterpart.

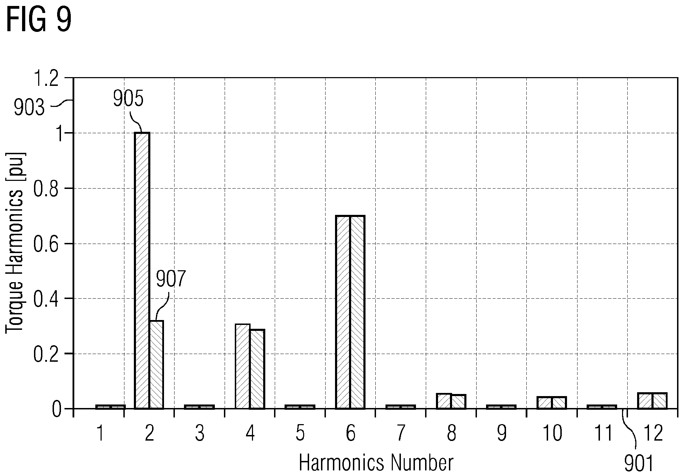

As a further confirmation of the accuracy of the proposed model, the optimized current is also injected in the FE model, again about 2/3 reductions in the 2F torque harmonic is obtained, as is illustrated in Fig. 9 in which the abscissa 901 indicates the harmonics number while the ordinate 903 indicates the torque. The column 905 illustrates the torque due to a pure sinusoidal current (without injecting any 2F current for the second harmonic). The column 907 represents the torque when a 2F current as determined according to embodiments of the present invention is injected. As can be taken from a comparison between the columns 905 and 907, the torque is reduced by roughly 2/3 when injecting the optimal 2F current. Fig. 9 shows additional torque at higher harmonics, such as the fourth and the sixth harmonics. Also this torque may partly be reduced using methods according to embodiments of the present invention. In particular, these torques may be reduced by injecting 4F current and/or 6F current. It should be noted that the proposed model parameters can still be used to determine the optimal 6F current to reduce 6F torque harmonics.

Furthermore, the proposed model may further be extended to any number of sets of stator windings, for example four three-phase systems. The dq-axis flux linkages under single systems may be calculated using the equations (8) and (9) below or by (10) and (11) for m systems (of in total n systems) under operation. The torque and inductances can still be calculated by equations (1) and (2), respectively.

Eq. (8):

$$\psi_d = \psi_{PM} + \psi_{d1}(I_{d1}) + \psi_{d1}(I_{q1}) + \psi_{d2}(I_{d1}) + \psi_{d2}(I_{q1})... + \psi_{dn}(I_{d1}) + \psi_{dn}(I_{q1}) =$$
$$\psi_{d1} + \Delta\psi_{d2}(I_{d1}, I_{q1})... + \Delta\psi_{dn}(I_{d1}, I_{q1})$$

Eq. (9):

$$\psi_q = \psi_{q1}(I_{d1}) + \psi_{q1}(I_{q1}) + \psi_{q2}(I_{d1}) + \psi_{q2}(I_{q1}).... + \psi_{q2}(I_{d1}) + \psi_{q2}(I_{q1}) =$$
$$\psi_{q1} + \Delta\psi_{q2}(I_{d1}, I_{q1})... + \Delta\psi_{qn}(I_{d1}, I_{q1})$$

Eq. (10):

$$\psi_d = \psi_{PM} + \psi_{d1}(I_{d1}) + \psi_{d1}(I_{q1}) + \psi_{d2}(I_{d1}) + \psi_{d2}(I_{q1})... + \psi_{dn}(I_{d1}) + \psi_{dn}(I_{q1})... + \psi_{d1}(I_{dm}) +$$
$$\psi_{d1}(I_{qm}) + \psi_{d2}(I_{dm}) + \psi_{d2}(I_{qm})...$$
$$+ \psi_{dn}(I_{dm}) + \psi_{dn}(I_{qm}) = \psi_{d1} + \Delta\psi_{d2}(I_{d1}, I_{q1})... + \Delta\psi_{dn}(I_{d1}, I_{q1})... + \Delta\psi_{d2}(I_{dm}, I_{qm})... + \Delta\psi_{dn}(I_{dm}, I_{qm})$$

Eq. (11):

$$\psi_q = \psi_{q1}(I_{d1}) + \psi_{q1}(I_{q1}) + \psi_{q2}(I_{d1}) + \psi_{q2}(I_{q1})... + \psi_{qn}(I_{d1}) + \psi_{qn}(I_{q1})... +$$
$$\psi_{q1}(I_{dm}) + \psi_{q1}(I_{qm}) + \psi_{q2}(I_{dm}) + \psi_{q2}(I_{qm})...$$
$$+ \psi_{qn}(I_{dm}) + \psi_{qn}(I_{qm}) = \psi_{q1} + \Delta\psi_{q2}(I_{d1},I_{q1})... + \Delta\psi_{qn}(I_{d1},I_{q1})... + \Delta\psi_{q2}(I_{dm},I_{qm})... + \Delta\psi_{qn}(I_{dm},I_{qm})$$

For calculating the optimal current to be injected to damp a given higher harmonics for example the following can be applied:

The 2F torque component which is due to the 2F flux linkage harmonics may for example be calculated as:

Eq. (12):

$$T_2 = 1.5p[\psi_{d2}I_{q0} + \psi_{q2}I_{d0}]$$

where $\psi_{d2}$, $\psi_{q2}$, $I_{d0}$ and $I_{q0}$ are 2F harmonics and DC values of the d- and q-axis flux linkages and currents, respectively.

To cancel (or at least significantly reduce) the 2F torque component, an appropriate 2F d- and q-axis currents ($I_{d2}$ and $I_{q2}$) can be injected to act with the DC values of the d- and q-axis flux linkages and generate 2F torque component that is equal and opposite to the original 2F torque in the above equation (12), as shown below in equation (13).

Eq. (13):

$$1.5p[\psi_{d2}I_{q0} + \psi_{q2}I_{d0}] = -1.5p[\psi_{d0}I_{q2} + \psi_{q0}I_{d2}]$$

Thereby, the flux linkage component, i.e. $\psi_{d0}$, $\psi_{q0}$, $\psi_{d2}$ and $\psi q_2$ can be obtained from the harmonic analysis of $\psi_d$ and $\psi_q$ which are accurately calculated by the proposed method. The $I_{d0}$ and $I_{q0}$ are decided by the required average torque (and voltage limitation). $I_{d2}$ can either be assumed to be zero or it is normally decided by the minimum 2F voltage ripple, on the other hand, $I_{q2}$ is calculated by equation (14).

Eq. (14):

$$I_{q2} = \frac{-[\psi_{d2}I_{q0} + \psi_{q0}I_{d2} + \psi_{q2}I_{d0}]}{\psi_{d0}}$$

Alternatively, both $I_{d2}$ and $I_{q2}$ can be scanned together to cancel the 2F torque component with the minimum 2F current component using the equation (15) below.

Eq. (15):

$$T_2 = 1.5p[\psi_{d0}I_{q2} + \psi_{d2}I_{q0} + \psi_{q0}I_{d2} + \psi_{q2}I_{d0}]$$

It is to be noted that the effectiveness of the 2F torque ripple reduction strongly depends on the accuracy of the flux linkage components prediction which are accurate according to embodiments of the present invention.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method for controlling an electrical machine (611) having a rotor with permanent magnets and having a stator system (610, 612) with at least a first set (613, 615, 617) and a second set (614, 616, 618) of stator windings, the method comprising:

   determining a primary first magnetic flux ($\Psi_{d1}(I_{d1})$, $\Psi_{q1}(I_{d1})$, $\Psi_{d1}(I_{q1})$, $\Psi_{q1}(I_{q1})$) generated by the first set of stator windings due to a first current in the first set of stator windings;

   **characterized in that** the method further comprises:

   determining a secondary second magnetic flux ($\Psi_{d2}(I_{d1})$, $\Psi_{q2}(I_{d1})$, $\Psi_{d2}(I_{q1})$, $\Psi_{q2}(I_{q1})$) generated by the second set of stator windings due to the first current in the first set of stator windings;
   determining a total magnetic flux ($\Psi_d$, $\Psi_q$) based on the primary first magnetic flux, the secondary second magnetic flux and a magnetic flux $\Psi_{PM}$ of the permanent magnets; and
   controlling the electrical machine based on the total magnetic flux,

   wherein the determining the primary first magnetic flux and the secondary second magnetic flux comprises:

   providing a finite element model of the electrical machine;
   providing as inputs the first current ($I_a$, $I_b$, $I_c$);
   applying the finite element model to calculate the primary first magnetic flux and the secondary second magnetic flux,

   wherein the controlling the electrical machine based on the total magnetic flux comprises:

   determining an inductance ($L_d$, $L_q$), based on the total magnetic flux; and
   controlling the electrical machine based on the inductance.

2. Method according to the preceding claim, further comprising:

   determining secondary first magnetic flux ($\Psi_{d1}(I_{d2})$, $\Psi_{q1}(I_{d2})$, $\Psi_{d1}(I_{q2})$, $\Psi_{q1}(I_{q2})$) generated by the first set of stator windings due to a second current in the second set of stator windings;
   determining a primary second magnetic flux $\Psi_{d2}(I_{d2})$, $\Psi_{q2}(I_{d2})$, $\Psi_{d2}(I_{q2})$, $\Psi_{q2}(I_{q2})$) generated by the second set of stator windings due to the second current in the second set of stator windings,
   wherein the determining a total magnetic flux is further based on the secondary first magnetic flux, the primary second magnetic flux and the magnetic flux $\Psi_{PM}$ of the permanent magnets,

   wherein in particular the second current is non zero.

3. Method according to one of the preceding claims,
   wherein determining the magnetic fluxes comprises determining respective d-components and q-components of a d-q coordinate system synchronously rotating with the rotor magnet field.

4. Method according to one of the preceding claims,
   wherein the controlling the electrical machine based on the total magnetic flux comprises:

   determining a torque (T), in particular comprising a d-component and a q-component, based on the total magnetic flux; and
   controlling the electrical machine further based on the torque.

5. Method according to one of the preceding claims, wherein the controlling the electrical machine based on the inductance and/or torque comprises:

   determining amplitude and phase of a higher harmonic current, in particular having frequency two times or four times an electrical frequency of the electrical machine, based on the inductance and/or torque; and
   injecting the higher harmonic current into the first stator windings (613, 615, 617) and/or the second stator windings (614, 616, 618).

6. Method according to the preceding claim, wherein the amplitude and the phase of a higher harmonic current is determined such as to counteract a higher harmonic component of the determined torque.

7. Method according to one of the preceding claims when referred to claim 2, wherein the determining the secondary first magnetic flux and the primary second magnetic flux comprises:

   providing as inputs of the finite element model the second current ($I'_a$, $I'_b$, $I'_c$);
   applying the finite element model to calculate the secondary first magnetic flux and the primary second magnetic flux.

8. Method according to one of the preceding claims, wherein the determining the magnetic fluxes comprises determining magnetic fluxes in a stationary coordinate system having axes corresponding to different phases of the sets of stator windings and transforming from the stationary coordinate system to the rotating dq-coordinate system, in particular using a Park-Clarke transformation.

9. Method according to one of the preceding claims, wherein the electrical machine has in total n sets of stator windings and m sets of stator windings have currents larger than zero, wherein m < n and the remaining n - m sets of stator windings have currents smaller than the m sets of stator windings, in particular substantially zero, or the currents of m sets are not equal, in particular substantially different.

10. Method according to one of the preceding claims, wherein the electrical machine comprises for every set of stator windings a converter connected to the respective set of windings, the converter having plural power transistors arranged between DC-buses, the method further comprising:
    controlling the power transistors regarding their switching based on the inductance and/or torque.

11. Arrangement (250, 251) adapted to control an electrical machine (611) having a rotor with permanent magnets and having a stator system (610, 612) with at least a first set (613, 615, 617) and a second set of stator windings (614, 616, 618), the arrangement comprising:

    an input portion adapted
    to receive a first current signal (637) indicative for a first current ($I_a$, $I_b$, $I_c$) in the first set of stator windings (613, 615, 617);
    a determining portion adapted

       to determine a primary first magnetic flux generated by the first set of stator windings (613, 615, 617) due to the first current ($I_a$, $I_b$, $I_c$) in the first set of stator windings,
       to determine a secondary second magnetic flux generated by the second set of stator windings due to the first current ($I_a$, $I_b$, $I_c$) in the first set of stator windings (613, 615, 617) and
       to determine a total magnetic flux based on the primary first magnetic flux, the secondary second magnetic flux and a magnetic flux of the permanent magnets; and
       to derive a control signal (635, 636) for controlling, in particular a converter of, the electrical machine (611) based on the total magnetic flux,

    wherein the determining the primary first magnetic flux and the secondary second magnetic flux comprises:

       providing a finite element model of the electrical machine;
       providing as inputs the first current ($I_a$, $I_b$, $I_c$);
       applying the finite element model to calculate the primary first magnetic flux and the secondary second magnetic flux,

    wherein the controlling the electrical machine via the control signal comprises:

       determining an inductance ($L_d$, $L_q$), based on the total magnetic flux; and
       controlling the electrical machine based on the inductance.

12. Generator system, comprising:

    a generator (611) having a rotor with permanent magnets and having a stator system (610, 612) with at least a first set (613, 615, 617) and a second set of stator windings (614, 616, 618);
a first converter (619) coupled the first set of stator windings (613, 615, 617);
a second converter (620) coupled the second set of stator windings (614, 616, 618);
an arrangement (650, 651) according to the preceding claim coupled such as to provide the control signal to the first converter and the second converter.

13. Wind turbine (600), comprising:

a rotor shaft (607) to which plural rotor blades (605) are connected;
a generator system (611, 650, 651) according to the preceding claim, the rotor of the generator system being mechanically coupled to the rotor shaft.

**Patentansprüche**

1. Verfahren zum Steuern einer elektrischen Maschine (611) mit einem Rotor mit Permanentmagneten und mit einem Statorsystem (610, 612) mit mindestens einem ersten Satz (613, 615, 617) und einem zweiten Satz (614, 616, 618) von Statorwicklungen, wobei das Verfahren umfasst:

Bestimmen eines primären ersten Magnetflusses ($\Psi_{d1}(I_{d1})$), ($\Psi_{q1}(I_{d1})$), ($\Psi_{d1}(I_{q1})$), ($\Psi_{q1}(I_{q1})$) generiert durch den ersten Satz von Statorwicklungen aufgrund eines ersten Stroms in dem ersten Satz von Statorwicklungen;
**dadurch gekennzeichnet, dass** das Verfahren weiter umfasst:

Bestimmen eines sekundären zweiten Magnetflusses ($\Psi_{d2}(I_{d1})$), ($\Psi_{q2}(I_{d1})$), ($\Psi_{d2}(I_{q1})$), ($\Psi_{q2}(I_{q1})$) generiert durch den zweiten Satz von Statorwicklungen aufgrund des ersten Stroms in dem ersten Satz von Statorwicklungen;
Bestimmen eines ersten Gesamtmagnetflusses ($\Psi_d$, $\Psi q$) auf Basis des primären ersten Magnetflusses, des sekundären zweiten Magnetflusses und eines Magnetflusses $\Psi_{PM}$ der Permanentmagneten; und
Steuern der elektrischen Maschine auf Basis des Gesamtmagnetflusses,
wobei das Bestimmen des primären ersten Magnetflusses und des sekundären zweiten Magnetflusses umfasst:

Bereitstellen eines Finite-Element-Modells der elektrischen Maschine;
Bereitstellen des ersten Stroms ($I_a$, $I_b$, $I_c$) als Eingaben;
Anwenden des Finite-Element-Modells zum Berechnen des primären ersten Magnetflusses und des sekundären zweiten Magnetflusses,
wobei das Steuern der elektrischen Maschine auf Basis des Gesamtmagnetflusses umfasst:

Bestimmen einer Induktanz ($L_d$, $L_q$) auf Basis des Gesamtmagnetflusses; und
Steuern der elektrischen Maschine auf Basis der Induktanz.

2. Verfahren nach dem vorhergehenden Anspruch, weiter umfassend:

Bestimmen eines sekundären ersten Magnetflusses ($\Psi_{d1}(I_{d2})$), ($\Psi_{q1}(I_{d2})$), ($\Psi_{d1}(I_{q2})$), ($\Psi_{q1}(I_{q2})$) generiert durch den ersten Satz von Statorwicklungen aufgrund eines zweiten Stroms in dem zweiten Satz von Statorwicklungen;
Bestimmen eines primären zweiten Magnetflusses ($\Psi_{d2}(I_{d2})$), ($\Psi_{q2}(I_{d2})$), ($\Psi_{d2}(I_{q2})$), ($\Psi_{q2}(I_{q2})$) generiert durch den zweiten Satz von Statorwicklungen aufgrund des zweiten Stroms in dem zweiten Satz von Statorwicklungen;
wobei das Bestimmen eines Gesamtmagnetflusses weiter auf dem sekundären ersten Magnetfluss, dem primären zweiten Magnetfluss und dem Magnetfluss $\Psi_{PM}$ der Permanentmagneten basiert,
wobei insbesondere der zweite Strom von null verschieden ist.

3. Verfahren nach einem der vorhergehenden Ansprüche,
wobei das Bestimmen der Magnetflüsse das Bestimmen jeweiliger d-Komponenten und q-Komponenten eines d-q-Koordinatensystems umfasst, das sich synchron mit dem Rotormagnetfeld dreht.

4. Verfahren nach einem der vorhergehenden Ansprüche,
wobei das Steuern der elektrischen Maschine auf Basis des Gesamtmagnetflusses umfasst:

Bestimmen eines Drehmoments (T), insbesondere umfassend eine d-Komponente und eine q-Komponente, auf Basis des Gesamtmagnetflusses; und

Steuern der elektrischen Maschine weiter auf Basis des Drehmoments.

5. Verfahren nach einem der vorhergehenden Ansprüche, wobei das Steuern der elektrischen Maschine auf Basis der Induktanz und/oder des Drehmoments umfasst:

Bestimmen von Amplitude und Phase eines höheren Oberwellenstroms, insbesondere mit einer Frequenz des Doppelten oder Vierfachen einer elektrischen Frequenz der elektrischen Maschine, auf Basis der Induktanz und/oder des Drehmoments; und

Einkoppeln des höheren Oberwellenstroms in die ersten Statorwicklungen (613, 615, 617) und/oder die zweiten Statorwicklungen (614, 616, 618).

6. Verfahren nach dem vorhergehenden Anspruch, wobei die Amplitude und die Phase eines höheren Oberwellenstroms so bestimmt wird, dass einer höheren Oberwellenkomponente des bestimmten Drehmoments entgegengewirkt wird.

7. Verfahren nach einem der vorhergehenden Ansprüche unter Bezugnahme auf Anspruch 2, wobei das Bestimmen des sekundären ersten Magnetflusses und des primären zweiten Magnetflusses umfasst:

Bereitstellen des zweiten Stroms ($I'_a$, $I'_b$, $I'_c$) als Eingaben des Finite-Element-Modells;

Anwenden des Finite-Element-Modells zum Berechnen des sekundären ersten Magnetflusses und des primären zweiten Magnetflusses.

8. Verfahren nach einem der vorhergehenden Ansprüche, wobei das Bestimmen der Magnetflüsse das Bestimmen von Magnetflüssen in einem stationären Koordinatensystem mit Achsen entsprechend verschiedenen Phasen der Sätze von Statorwicklungen und das Transformieren von dem stationären Koordinatensystem zu dem rotierenden dq-Koordinatensystem, insbesondere unter Verwendung einer Park-Clarke-Transformation, umfasst.

9. Verfahren nach einem der vorhergehenden Ansprüche, wobei die elektrische Maschine insgesamt n Sätze von Statorwicklungen und m Sätze von Statorwicklungen mit Strömen größer als null aufweist, wobei m < n und die übrigen n - m Sätze von Statorwicklungen Ströme kleiner als die m Sätze von Statorwicklungen, insbesondere im Wesentlichen null, aufweisen oder die Ströme von m Sätzen nicht gleich sind, insbesondere im Wesentlichen verschieden.

10. Verfahren nach einem der vorhergehenden Ansprüche, wobei die elektrische Maschine für jeden Satz von Statorwicklungen einen mit dem jeweiligen Satz von Wicklungen verbundenen Wandler umfasst, wobei der Wandler mehrere zwischen DC-Bussen angeordnete Leistungstransistoren aufweist, wobei das Verfahren weiter umfasst:
Steuern der Leistungstransistoren bezüglich ihres Schaltens auf Basis der Induktanz und/oder des Drehmoments.

11. Anordnung (250, 251), die ausgelegt ist zum Steuern einer elektrischen Maschine (611) mit einem Rotor mit Permanentmagneten und mit einem Statorsystem (610, 612) mit mindestens einem ersten Satz (613, 615, 617) und einem zweiten Satz (614, 616, 618) von Statorwicklungen, wobei die Anordnung umfasst:

einen Eingabeabschnitt, der ausgelegt ist

zum Empfangen eines ersten Stromsignals (637), das einen ersten Strom ($I_a$, $I_b$, $I_c$) in dem ersten Satz von Statorwicklungen (613, 615, 617) anzeigt;

einen Bestimmungsabschnitt, der ausgelegt ist

zum Bestimmen eines primären ersten Magnetflusses generiert durch den ersten Satz von Statorwicklungen (613, 615, 617) aufgrund des ersten Stroms ($I_a$, $I_b$, $I_c$) in dem ersten Satz von Statorwicklungen;

Bestimmen eines sekundären zweiten Magnetflusses generiert durch den zweiten Satz von Statorwicklungen aufgrund des ersten Stroms ($I_a$, $I_b$, $I_c$) in dem ersten Satz von Statorwicklungen (613, 615, 617);

Bestimmen eines ersten Gesamtmagnetflusses auf Basis des primären ersten Magnetflusses, des sekundären zweiten Magnetflusses und eines Magnetflusses der Permanentmagneten; und

zum Ableiten eines Steuersignals (635, 636) zum Steuern, insbesondere eines Wandlers, der elektrischen Maschine (611) auf Basis des Gesamtmagnetflusses, wobei das Bestimmen des primären ersten Magnetflusses und des sekundären zweiten Magnetflusses umfasst:

Bereitstellen eines Finite-Element-Modells der elektrischen Maschine;
Bereitstellen des ersten Stroms ($I_a$, $I_b$, $I_c$) als Eingaben;
Anwenden des Finite-Element-Modells zum Berechnen des primären ersten Magnetflusses und des sekundären zweiten Magnetflusses,
wobei das Steuern der elektrischen Maschine über das Steuersignal umfasst:

Bestimmen einer Induktanz ($L_d$, $L_q$) auf Basis des Gesamtmagnetflusses; und
Steuern der elektrischen Maschine auf Basis der Induktanz.

**12.** Generatorsystem, umfassend:

einen Generator (611) mit einem Rotor mit Permanentmagneten und mit einem Statorsystem (610, 612) mit mindestens einem ersten Satz (613, 615, 617) und einem zweiten Satz (614, 616, 618) von Statorwicklungen;
einen ersten Wandler (619), der an den ersten Satz von Statorwicklungen (613, 615, 617) gekoppelt ist;
einen zweiten Wandler (620), der an den zweiten Satz von Statorwicklungen (614, 616, 618) gekoppelt ist;
eine Anordnung (650, 651) nach dem vorhergehenden Anspruch, der derart gekoppelt ist, dass er das Steuersignal an den ersten Wandler und den zweiten Wandler liefert.

**13.** Windturbine (600), umfassend:

eine Rotorwelle (607), mit der mehrere Rotorblätter (605) verbunden sind;
ein Generatorsystem (611, 650, 651) nach dem vorhergehenden Anspruch, wobei der Rotor des Generatorsystems mechanisch an die Rotorwelle gekoppelt ist.

**Revendications**

**1.** Procédé pour commander une machine électrique (611) qui comporte un rotor qui est pourvu d'aimants permanents et qui comporte un système de stator (610, 612) qui est pourvu d'au moins un premier jeu (613, 615, 617) et un second jeu (614, 616, 618) d'enroulements de stator, le procédé comprenant :

la détermination d'un premier flux magnétique primaire ($\Psi_{d1}(I_{d1})$), ($\Psi_{q1}(I_{d1})$, ($\Psi_{d1}(I_{q1})$), ($\Psi_{q1}(I_{q1})$)) qui est généré par le premier jeu d'enroulements de stator du fait d'un premier courant dans le premier jeu d'enroulements de stator ;
**caractérisé en ce que** le procédé comprend en outre :

la détermination d'un second flux magnétique secondaire ($\Psi_{d2}(I_{d1})$), ($\Psi_{q2}(I_{d1})$), ($\Psi_{d2}(I_{q1})$), ($\Psi_{q2}(I_{q1})$)) qui est généré par le second jeu d'enroulements de stator du fait du premier courant dans le premier jeu d'enroulements de stator ;
la détermination d'un flux magnétique total ($\Psi_d$, $\Psi_q$) sur la base du premier flux magnétique primaire, du second flux magnétique secondaire et d'un flux magnétique $\Psi_{PM}$ des aimants permanents ; et
la commande de la machine électrique sur la base du flux magnétique total ;
dans lequel la détermination du premier flux magnétique primaire et du second flux magnétique secondaire comprend :

la fourniture d'un modèle par éléments finis de la machine électrique ;
la fourniture, en tant qu'entrées, du premier courant ($I_a$, $I_b$, $I_c$) ; et
l'application du modèle par éléments finis pour calculer le premier flux magnétique primaire et le second flux magnétique secondaire ; et
dans lequel la commande de la machine électrique sur la base du flux magnétique total comprend :

la détermination d'une inductance ($L_d$, $L_q$) sur la base du flux magnétique total ; et
la commande de la machine électrique sur la base de l'inductance.

**2.** Procédé selon la revendication précédente, comprenant en outre :

la détermination d'un premier flux magnétique secondaire ($\Psi_{d1}(I_{d2})$), ($\Psi_{q1}(I_{d2})$), ($\Psi_{d1}(I_{q2})$), ($\Psi_{q1}(I_{q2})$)) qui est généré par le premier jeu d'enroulements de stator du fait d'un second courant dans le second jeu d'enroulements de stator ; et

la détermination d'un second flux magnétique primaire ($\Psi_{d2}(I_{d2})$), ($\Psi_{q2}(I_{d2})$), ($\Psi_{d2}(I_{q2})$), ($\Psi_{q2}(I_{q2})$) ) qui est généré par le second jeu d'enroulements de stator du fait du second courant dans le second jeu d'enroulements de stator ;

dans lequel la détermination d'un flux magnétique total est en outre basée sur le premier flux magnétique secondaire, le second flux magnétique primaire et le flux magnétique $\Psi_{PM}$ des aimants permanents ; et

dans lequel, en particulier, le second courant n'est pas à zéro.

**3.** Procédé selon l'une quelconque des revendications précédentes, dans lequel la détermination des flux magnétiques comprend la détermination de composantes d et de composantes q respectives d'un système de coordonnées d-q en rotation synchrone avec le champ magnétique du rotor.

**4.** Procédé selon l'une quelconque des revendications précédentes, dans lequel la commande de la machine électrique sur la base du flux magnétique total comprend :

la détermination d'un couple (T), en particulier qui comprend une composante d et une composante q, sur la base du flux magnétique total ; et

la commande de la machine électrique en outre sur la base du couple.

**5.** Procédé selon l'une quelconque des revendications précédentes, dans lequel la commande de la machine électrique sur la base de l'inductance et/ou du couple comprend :

la détermination d'une amplitude et d'une phase d'un courant d'harmoniques supérieures, en particulier qui présente une fréquence qui est égale à deux fois ou quatre fois une fréquence électrique de la machine électrique, sur la base de l'inductance et/ou du couple ; et

l'injection du courant d'harmoniques supérieures à l'intérieur des premiers enroulements de stator (613, 615, 617) et/ou des seconds enroulements de stator (614, 616, 618).

**6.** Procédé selon la revendication précédente, dans lequel l'amplitude et la phase d'un courant d'harmoniques supérieures sont déterminées de manière à contrer une composante d'harmoniques supérieures du couple déterminé.

**7.** Procédé selon l'une quelconque des revendications précédentes lorsqu'elle dépend de la revendication 2, dans lequel la détermination du premier flux magnétique secondaire et du second flux magnétique primaire comprend :

la fourniture, en tant qu'entrées du modèle par éléments finis, du second courant ($I'_a$, $I'_b$, $I'_c$) ; et

l'application du modèle par éléments finis pour calculer le premier flux magnétique secondaire et le second flux magnétique primaire.

**8.** Procédé selon l'une quelconque des revendications précédentes, dans lequel la détermination des flux magnétiques comprend la détermination de flux magnétiques dans un système de coordonnées stationnaires qui comporte des axes qui correspondent aux différentes phases des jeux d'enroulements de stator et la transformation depuis le système de coordonnées stationnaires selon le système de coordonnées dq de rotation, en particulier en utilisant une transformation de Park-Clarke.

**9.** Procédé selon l'une quelconque des revendications précédentes, dans lequel la machine électrique comporte au total n jeux d'enroulements de stator, et m jeux d'enroulements de stator présentent des courants supérieurs à zéro, dans lequel m < n et les n - m jeux restants d'enroulements de stator présentent des courants qui sont inférieurs à ceux des m jeux d'enroulements de stator, en particulier ils sont sensiblement à zéro, ou les courants de m jeux d'enroulements de stator ne sont pas égaux, en particulier ils sont sensiblement différents.

**10.** Procédé selon l'une quelconque des revendications précédentes, dans lequel la machine électrique comprend, pour chaque jeu d'enroulements de stator, un convertisseur qui est connecté au jeu respectif d'enroulements, le convertisseur comportant plusieurs transistors de puissance qui sont agencés entre des bus DC, le procédé comprenant en outre :

la commande des transistors de puissance en ce qui concerne leur commutation sur la base de l'inductance et/ou du couple.

**11.** Agencement (250, 251) adapté pour commander une machine électrique (611) qui comporte un rotor qui est pourvu d'aimants permanents et qui comporte un système de stator (610, 612) qui est pourvu d'au moins un premier jeu (613, 615, 617) et un second jeu (614, 616, 618) d'enroulements de stator, l'agencement comprenant :

une partie d'entrée qui est adaptée pour

recevoir un premier signal de courant (637) qui est indicatif d'un premier courant ($I_a$, $I_b$, $I_c$) dans le premier jeu d'enroulements de stator (613, 615, 617) ; et

une partie de détermination qui est adaptée pour

déterminer un premier flux magnétique primaire qui est généré par le premier jeu d'enroulements de stator (613, 615, 617) du fait du premier courant ($I_a$, $I_b$, $I_c$) dans le premier jeu d'enroulements de stator ; pour déterminer un second flux magnétique secondaire qui est généré par le second jeu d'enroulements de stator du fait du premier courant ($I_a$, $I_b$, $I_c$) dans le premier jeu d'enroulements de stator (613, 615, 617) ; pour déterminer un flux magnétique total sur la base du premier flux magnétique primaire, du second flux magnétique secondaire et d'un flux magnétique des aimants permanents ; et pour dériver un signal de commande (635, 636) pour commander la machine électrique (611), en particulier un convertisseur de ladite machine électrique, sur la base du flux magnétique total ;

dans lequel la détermination du premier flux magnétique primaire et du second flux magnétique secondaire comprend :

la fourniture d'un modèle par éléments finis de la machine électrique ;
la fourniture, en tant qu'entrées, du premier courant ($I_a$, $I_b$, $I_c$) ; et
l'application du modèle par éléments finis pour calculer le premier flux magnétique primaire et le second flux magnétique secondaire ; et

dans lequel la commande de la machine électrique via le signal de commande comprend :

la détermination d'une inductance ($L_d$, $L_q$), sur la base du flux magnétique total ; et
la commande de la machine électrique sur la base de l'inductance.

12. Système de générateur, comprenant :

un générateur (611) qui comporte un rotor qui est pourvu d'aimants permanents et qui comporte un système de stator (610, 612) qui est pourvu d'au moins un premier jeu (613, 615, 617) et un second jeu (614, 616, 618) d'enroulements de stator ;
un premier convertisseur (619) qui est couplé au premier jeu d'enroulements de stator (613, 615, 617) ;
un second convertisseur (620) qui est couplé au second jeu d'enroulements de stator (614, 616, 618) ; et
un agencement (650, 651) selon la revendication précédente qui est couplé de manière à fournir le signal de commande au premier convertisseur et au second convertisseur.

13. Éolienne (600), comprenant :

un arbre de rotor (607) sur lequel plusieurs pales de rotor (605) sont connectées ; et
un système de générateur (611, 650, 651) selon la revendication précédente, le rotor du système de générateur étant couplé mécaniquement à l'arbre de rotor.

FIG 1

FIG 2

[a] Operating system

## FIG 3

[b] Non-operating system

## FIG 4

# FIG 5

FIG 6

EP 3 258 594 B1

## FIG 7

## FIG 8

# FIG 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2169822 A1

- US 2015270747 A1

**Non-patent literature cited in the description**

- Determination of the inductance parameters for the decoupled-model of double-star permanent-magnet synchronous mach. **KALLIO SAMULI et al.** IET ELECTRIC POWER APPLICATIONS. IET, 01 February 2014, vol. 8, 39-49